Europäisches Patentamt

**European Patent Office**

Office européen des brevets

(19)

(11) Publication number: **0 017 926**
A1

(12)

# EUROPEAN PATENT APPLICATION

(21) Application number: **80101944.9**

(22) Date of filing: **10.04.80**

(51) Int. Cl.³: **G 01 M 1/22**, G 01 M 1/20

(30) Priority: **20.04.79 US 31702**

(43) Date of publication of application: **29.10.80**
**Bulletin 80/22**

(84) Designated Contracting States: **BE DE FR GB IT NL**

(71) Applicant: **IRD MECHANALYSIS, Inc., 6150 Huntley Road, Columbus Ohio 43229 (US)**

(72) Inventor: **Blackburn, Bobby Jo, 444 Colton Road, Columbus, Ohio 43207 (US)**
Inventor: **Csokmay, John Michael, 2761 Wildwood Road, Columbus, Ohio 43229 (US)**

(74) Representative: **Patentanwälte Dipl.-Ing. A. Grünecker, Dr.-Ing. H. Kinkeldey, Dr.-Ing. W. Stockmair,, Dr. rer. nat. K. Schumann, Dipl.-Ing. P.H. Jakob, Dr. rer. nat. G. Bezold Maximilianstrasse 43, D-8000 München 22 (DE)**

(54) **Digital electronic balancing apparatus.**

(57) Electronic balancing apparatus for rotating bodies in which unbalance read-out for two-plane dynamic balancing can be obtained on an initial run without the need for trial wights or calibration runs, and wherein manual filter tuning, manual ranging of amount displays and manual entry of right and left calibration weights are eliminated. In addition, the system will automatically divide correction weights between two points on a rotor, will combine multiple corrections into one weight, and incorporates memory meters which hold their readings from run-to-run without adjustment.

- 1 -

## Digital Electronic Balancing Apparatus

As is known, in two-plane balancing of rotating bodies, it is necessary to make some provision for the elimination of cross-effect and to provide a method for accurately calibrating the analyzing instrument. In this respect, it is necessary to make some provision for assuring that the unbalance in one correction plane does not enter into the unbalance indication for the other correction plane.

In early electronic balancing devices, calibration could be achieved only after a laborious procedure involving a number of trial runs and the use of trial weights on the rotating body. Subsequently, balancing apparatus was developed in which the unbalance read-out for two-plane dynamic balancing could be obtained on an initial run without the need for trial weights. Such systems, however, require a number of manual manipulations by the operator such as manual filter tuning to adjust the filter in the balancing equipment to correspond to the speed of rotation of the rotating body and manual entry of right and left calibration weights determined during the calibration procedure.

In accordance with the present invention, new and improved electronic balancing apparatus is provided which eliminates the necessity for manual filter tuning and manual entry of right and left calibration weights as well as manual ranging of amount displays. In addition, the system can automatically divide a correction weight between two points into one weight and incorporates automatic ranging of amount displays. The system utilizes a microprocessor and an automatic digital tracking filter which insures that only those vibration signals having a frequency corresponding to the speed of rotation of the rotating body will pass into the analyzer.

The above and other objects and features of the invention will become apparent from the following detailed description taken in connection with the accompanying drawings which form a part of this specification, and in which:

FIGURE 1    is an elevational view of the control panel for the vibration analyzing apparatus of the invention;

FIGURE 2    is a block schematic diagram of the vibration analyzing apparatus of the invention; and

FIGURES 3A-3C, when placed side-by-side, comprise a schematic circuit diagram of certain portions of the circuitry shown in FIGURE 2.

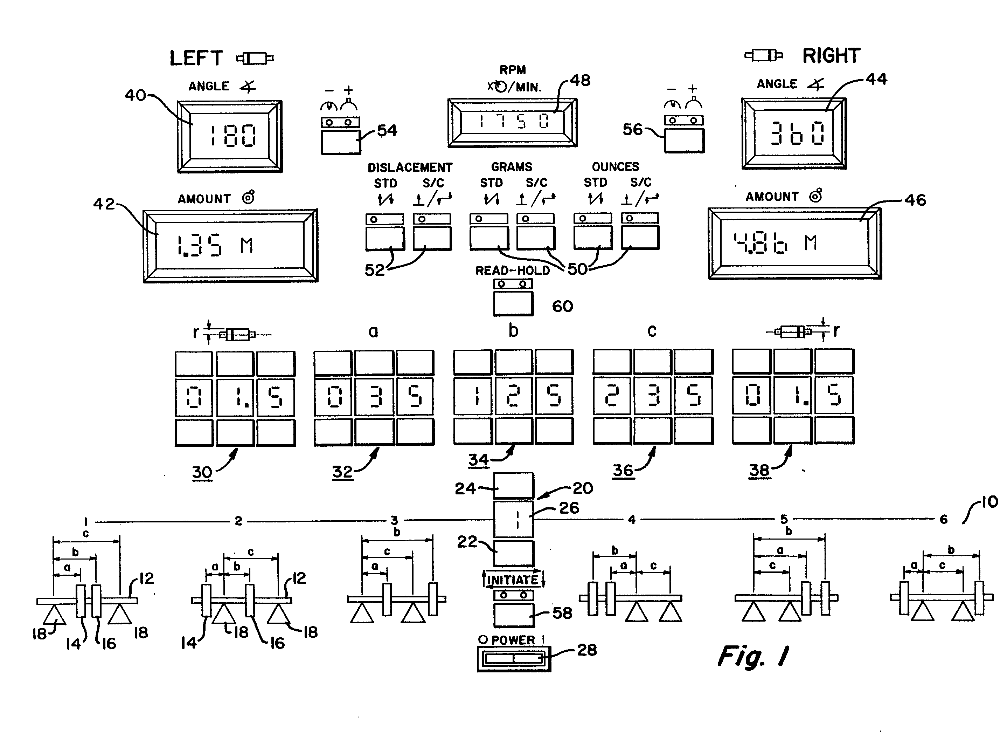

With references now to the drawings, and particularly to FIGURE 1, there is shown the face of the control panel for the vibration analyzing apparatus of the invention. Provided on the front face 10 of the control panel are various balancing configurations numbered 1 through 6. In configuration 1, for example, rotor 12 having two balance planes 14 and 16 is supported between spaced bearings 18. In configuration 2, on the other hand, the two balance planes 14 and 16 are on opposite sides of one of the bearings 18. The balance planes 14 and 16 are those planes in which correction weights are to be added.  In many rotors, balance
weight attachment points, such as threaded holes, are spaced
around the periphery of the rotor in each balance plane.

On each configuration are three dimensions $\underline{a}$, $\underline{b}$ and $\underline{c}$.
Dimension $\underline{a}$ is the distance between one balance plane and
the left bearing 18; dimension $\underline{b}$ is the distance between the
other balance plane 16 and the bearing 18; and the dimension
$\underline{c}$ is the spacing between the bearings 18.  In setting up a
balancing operation, an operator will initially determine
which configuration is to be employed, depending upon the
type of rotor which is to be balanced and the manner in
which it is supported on the two spaced bearings 18.
Provided on the front face 10 is a plurality of touch-
advance digital switches, one of which is identified by the
reference numeral 20 and is designated as a mode switch.
While any type of switch may be used in accordance with the
present invention, the touch-advance digital switches
employed herein comprise a lower touch plate 22, an upper
touch plate 24 and an intermediate light-emitting diode
alpha-numeric display 26.  By momentarily touching the lower
plate 22 four times, for example, the numeral displayed on
the display 26 will advance through the numerals 1 through
4.  On the other hand, the display may be reset to zero by
simply touching the upper plate 24.

In the operation of the analyzing apparatus, the power
switch 28 is turned ON; the proper configuration, 1 through
6, is selected; and after calibration about to be described,
the lower plate of switch 20 is touched a number of times
corresponding to the number above the selected configuration
such that the number appearing in the display 26 will
correspond to that of the configuration chosen.  Above the
mode switch 20 are five sets of switches 30, 32, 34, 36 and
38.  Switches 32, 34 and 36 are utilized to introduce into
the analyzing equipment the dimensions $\underline{a}$, $\underline{b}$ and $\underline{c}$ for the
particular configuration displayed on display 26.  In the example given in FIGURE 1, for example, dimension a comprises
3.5 inches, dimension b comprises 12.5 inches and dimension
c comprises 23.5 inches. Switches 30 and 38 are utilized to
incorporate into the analyzing equipment the radius r at
which correction weights are to be added in the two correction planes 14 and 16. In the particular example given in
FIGURE 1, for example, this distance is 1.5 inches.

Above the switches 30-38 are left angle and amount digital
displays 40 and 42, respectively and right angle and amount
digital displays 44 and 46. At the top central portion of
the panel is a digital RPM meter 48 which displays the speed
of the rotor being balanced, usually in revolutions per
minute. The amount of a correction weight is displayed in
the displays 42 and 46 in either grams or ounces or status
couple, depending upon which one of the switches 50 is
activated. By touching one of the two switches 52, on the
other hand, the meters or displays 42 and 46 will display
vibration displacement in mils or microns. The displays 40
and 44 above displays 42 and 46 display the angle at which a
correction weight should be added or the angle at which
material should be removed from the correction plane at the
radius r. If a weight is to be added, for example, the
right side of touch switch 54 is contacted; whereupon the
display 40 will indicate the angle from a reference point on
the rotor at which a weight should be added. On the other
hand, if the left side of touch switch 54 is contacted, the
display 40 will indicate the angle, measured from the
aforesaid reference point, at which material should be
removed from the rotor so as to balance it. A similar
switch 56 is provided for the right plane.

In carrying out a balancing operation, a single configuration
1 through 6 is initially selected and the dimensions then
entered on switches 30-38. Thereafter, the initiate switch
58 is contacted; whereupon the system initially automatically
calibrates itself. At the end of the calibration step, displays 42 and 46 indicate that the system is ready to
start a balancing operation.  After calibration, the rotor
62 is caused to rotate; whereupon displays 40-46 will read
out the amounts and angles for vibration displacement in the
left and right planes.  The vibration analyzing system
retains the information previously established by touching
the read/hold switch 60.  With the vibration displacement
held, the rotor may be stopped.  The correction amounts and
angles may be displayed by touching the appropriate correction mode switch 50.  Should it become necessary to change
any one of the dimensions, 30, 32, 34, 36, 38, the correction
call-out will instantly update itself with the correction.

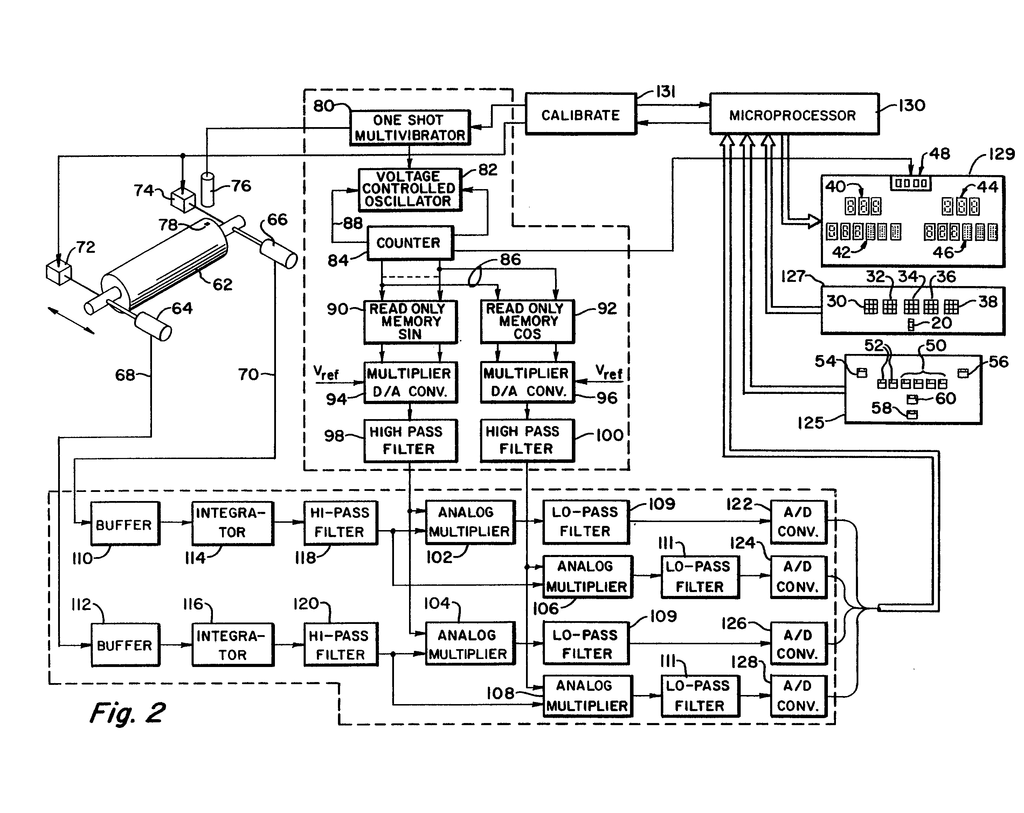

With reference now to FIGURE 2, elements shown therein which
correspond to those of FIGURE 1 are identified by like
reference numerals at the upper right-hand side of the
figure.  A rotor to be balanced is indicated generally by
the reference numeral 62 in FIGURE 2.  The system includes
vibration pickups 64 and 66 each of which is adapted to
produce a displacement vibration signal on lead 68 or 70 at
a frequency corresponding to the speed of rotation of the
rotor 62.  Also adapted to be connected to the bearings, now
shown, which support the rotor 62 are calibrating oscillators
62 and 64, each of which is adapted to oscillate one end of
the rotor through a known displacement at a known calibration
weight and a known radius.  Above the rotor 62 is a speed
transducer 76, such as a photocell, which is trained on a
spot 78 on the rotor, the arrangement being such that each
time the rotor rotates through one revolution, a pulse will
be produced by the speed transducer 76.  As will be understood, the frequency of these pulses corresponds to the
speed of rotation of the rotor.  The pulses from the speed
transducer 76 are applied to the input of a one-shot multivibrator 80.  The output of one-shot multivibrator 80, in
turn, is applied to a voltage controlled oscillator connected
in a phase locked loop with a counter 84.  The voltage
controlled oscillator 82 multiplies the frequency of the input pulses from the one-shot multivibrator 80 by 256; and the counter 84 counts these pulses and produces output digital signals on leads 86 representative of 256 times the input frequency. At the same time, a feedback on lead 88 from the counter 84 to the voltage controlled oscillator operates through a phase detector, in a manner hereinafter described, to lock the oscillator at a frequency of 256 times the input frequency of pulses from multivibrator 80.

The outputs from counter 84 on leads 86 are applied to a sine read-only memory 90 as well as a cosine read-only memory 92 which are simply read-only memories programmed to produce trig tables containing n-point sinusoids. The outputs of the two memory circuits, in turn, are applied to combination multipliers and digital-to-analog converters 94 and 96, respectively, which produce output sine wave signals represented as $V_R \sin \omega t$ and $V_R \cos \omega t$, respectively, where $\omega$ is the speed or rotation of the rotor 62. These are passed through high-pass filters 98 and 100, the $V_R \sin \omega t$ signals being applied to analog multipliers 102 and 104 and the $V_R \cos \omega t$ signals being applied to analog multipliers 106 and 108.

Reverting again to the upper left-hand corner of FIGURE 2, the vibration displacement signals on leads 68 and 70 are applied through two buffer stages 110 and 112 to integrators 114 and 116, respectively. The outputs of the integrators, in turn, are applied through two high-pass filters 118 and 120, the output of filter 118 being applied to multipliers 102 and 106 and the output of filter 120 being applied to multipliers 104 and 108.

The output of filter 118 can be represented as:

$$V_u \sin \omega t + \phi_R .$$

where $\phi_R$ represents the phase displacement of the right plane vibration signal from the signal $V_R \sin t$ at the output of filter 98. The output of filter 120 can be represented as:

$$V_u \sin \omega t + \emptyset_L$$

where $\emptyset_L$ represents the phase displacement of the left plane vibration signal from the signal at the output of filter 98. In this regard, it will be appreciated that the angles $\emptyset_R$ and $\emptyset_L$ are those at which the unbalance points in the right and left planes are displaced from the mark 78 on rotor 62.

The multipliers 102-108 may be of the type manufactured by Analog Devices, Inc. and identified as their AD532 phase-meter. The two inputs to multiplier 102, for example, are:

$$V_u \sin \omega t + \emptyset_R$$

and

$$V_R \sin \omega t$$

The output signal $E_o$ from the multiplier is represented by:

$$E_o = \frac{V_u V_R}{10} \sin \omega t \, (\sin \omega t \cos \emptyset_R + \cos \omega t \sin \emptyset_R)$$

or

$$E_o = \frac{V_u V_R}{10} (\sin^2 \omega t \cos \emptyset_R + \sin \omega t \cos \omega t \sin \emptyset_R)$$

or

$$E_o = \frac{V_u V_R}{20} ([1 - \cos 2\omega t] \cos \emptyset_R + \sin 2\omega t \sin \emptyset_R)$$

When the vibration and reference signals are in phase:

$$E_o = \frac{V_u V_R}{20} \cos \emptyset_R = \frac{V V_R}{20}$$

However, when the two signals are not in phase, the voltage output varies as the sine function.

The operation of the multiplier 106 is the same as that of multiplier 102 except that the reference signals is now $V_R \cos \omega t$ rather than $V_R \sin \omega t$.

The outputs of multipliers 102 and 104 are filtered through low-pass filters 109 to produce direct current signals representative of the real amount of the unbalance in the right and left balancing planes; while the outputs of multipliers 106 and 108, after balancing in filters 111 comprise direct current signals proportional to the imaginary amount of the unbalance in the right and left balancing planes.  This can best be understood from the following diagram:

where V represents the absolute unbalance at an angle $\emptyset$ with respect to the mark 78 on the rotor 62 and $V_{Re}$ and $V_I$ represent the real and imaginary amounts of the unbalance at the outputs of the multipliers.  From the two direct current signals representing the right angle vectors $V_{Re}$ and $V_I$, the amount and phase angle of the true or absolute unbalance vector V is calculated from straightforward trigonometric equations in the microprocessor 130.

It will be appreciated from the equations given above that while the multipliers 102-108 comprise phase detectors and produce output signals which are proportional to the phase difference between a reference signal and a vibration signal, they also act as synchronous filters.  That is, when the quantity, $\omega$, in the expression $V_u \sin \omega t + \emptyset$ representing

the vibration signal is not equal to the same quantity in the expression $V_R \sin\omega t$ or $V_R \cos\omega t$ representing the reference signal, the outputs of the multipliers will drop to zero. Consequently, only true vibration signals corresponding in frequency to the speed of rotation of the rotor will pass through the multipliers and all other frequencies will be filtered out.

The outputs of the low-pass filters 109 and 111 are applied through analog-to-digital converters 122 through 128; and the outputs of the converters 122-128 are applied to a microprocessor 130. Also applied to the microprocessor are the control signals from the various pushbutton switches on panel 125 previously described and the dimensions a, b and c and the radii r from the control panel 127. The output of the microprocessor is coupled to panel 127 as well as to the display panel 129 which contains the angle and amount meters previously described as well as the RPM meter 48 which is connected to the output of counter 84. The microprocessor 130 is also connected to a calibration circuit 131 which actuates the mechanical oscillators 74 and 84 to initially calibrate the system in a manner hereinafter described.

Let it be assumed that the radii r and the dimensions a, b and c for configuration 1 shown in FIGURE 1 have been entered on the switches 30-38. To initially calibrate the system as described above, the initiation switch 58 shown in FIGURE 1, which is connected to the microprocessor 130 of FIGURE 2, is touched. At this time, the rotor 62 is not rotating.

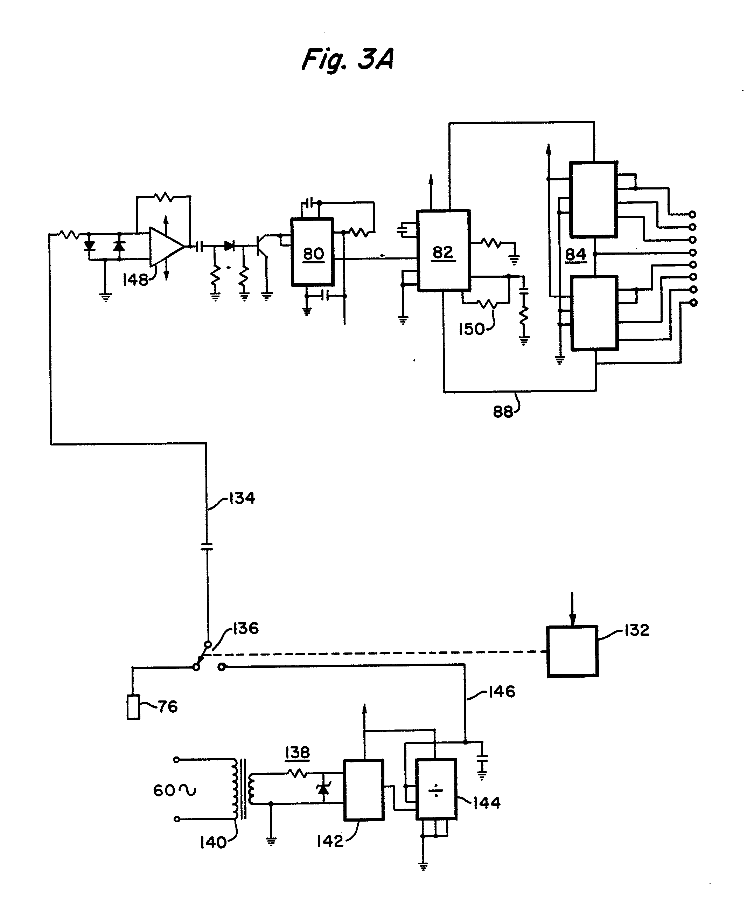

with reference to FIGURE 3A, the microprocessor 130 actuates a latch circuit 132 to disconnect lead 134 from speed transducer 76 and connect it, via switch 136, to calibration circuitry generally indicated by the reference numeral 138. The calibration circuitry 138 includes a transformer 140 connected to a 60-hertz input source, the secondary winding on transformer 140 being connected to a Schmitt-trigger
circuit 142. The output of the Schmitt-trigger circuit 142,
in turn, is connected to a divider 144 which divides by
five, thereby producing on lead 146 a signal having a
frequency of 12 hertz which is representative of 720 revolutions per minute of the rotor 62, this being the calibration speed assumed. The calibration signal on lead 134 is
applied through an amplifier 148 to the one-shot multivibrator 80 previously described in connection with FIGURE
2. The output of the one-shot multivibrator, in turn, is
applied to the voltage controlled oscillator 82 coupled to
counter 84 which feeds back a signal via the lead 88 to a
phase detecting filter 150 incorporated into the voltage
controlled oscillator 82 such that if the frequency at the
output of the oscillator 82 should vary, the feedback on
lead 88 will effect any necessary correction.

At the same time, the microprocessor 130, through circuit
131 shown in FIGURE 2, initially causes the mechanical
oscillator 74 for the right plane to oscillate the right end
of the rotor 62 being balanced. The oscillator 74 effects
an oscillation in the right end of the rotor through a known
displacement at a known weight and radius. Similarly, the
mechanical oscillator 72 for the left plane is next caused
to oscillate. During the calibration step, the microprocessor
performs the following calculations:

$$J_R = c \frac{(X_2 - X_{1ce})}{X_1 + X_2 - X_{1ce} - X_{2ce}} \tag{1}$$

$$J_L = c - J_R \tag{2}$$

$$A = X_{2ce} + (X_2 - X_{2ce}) \frac{c-b}{c} \frac{J_L}{J_R} \tag{3}$$

$$B = X_1 - (X_1 - X_{1ce}) \frac{a}{c} \tag{4}$$

$$C = X_2 - (X_2 - X_{2ce}) \frac{c-b}{c} \tag{5}$$

$$D = X_{1ce} + (X_1 - X_{1ce}) \frac{a}{c} \frac{J_R}{J_L} \qquad (6)$$

$$W_L R_L = W_C R_C \; \frac{CX_L - AX_R}{BC - AD} \qquad (7)$$

$$W_R R_R = W_C R_C \; \frac{BX_R - DX_L}{BC - AD} \qquad (8)$$

In the foregoing equations, the various symbols have the following meanings:

$X_1$ = displacement in right plane under the influence of mechanical oscillator 74;

$X_{1ce}$ = cross-effect displacement in the left plane while the mechanical oscillator 74 is operative;

$X_2$ = displacement in left plane under the effect of oscillator 72;

$X_{2ce}$ = cross-effect in right plane from oscillator 72;

$J_R$ = the distance between the right support bearing and the center of gravity of the rotor;

$J_L$ = the distance between the left support bearing and the center of gravity of the rotor;

$a$, $b$ and $c$ correspond to the dimensions for a particular configuration shown in FIGURE 1;

$W_C$ = known calibration weight;

$R_C$ = the radius at which the calibration rate is rotating to oscillate the rotor during calibration conditions;

$W_L$ and $W_R$ = the necessary correction weights for the left and right planes, respectively; and

0017926

$R_L$ and $R_R$ = the radii at which the correction weights
are to be added to the left and right
planes, these corresponding to the radii $\underline{r}$
shown in FIGURE 1.

It will be appreciated, of course, that only one oscillator
72 or 74 is actuated at any one time.

From the foregoing, it will be appreciated that once the
system is calibrated, only the quantities $W_L$ and $W_R$ are
unknown such that the microprocessor can solve Equations (7)
and (8) above to determine the correction weights for the
two correction planes selected. Once the system has been
calibrated, the calibration weights will be displayed on the
amount meters 42 and 46; and after the calibration has been
completed, a signal will appear on the amount meters 42 and
46 indicating that calibration has been completed and that
the system is now ready to start a balancing operation. At
this point, the configuration 1 through 6 is set by the
switch 20 and the rotor 62 is caused to rotate by manually
actuating a drive motor, not shown. At this point, the
foregoing equations are solved by the microprocessor 130 to
indicate on the meters 42 and 46 the amount of unbalance in
the two balance planes and the angles from the spot 78 on
the rotor 62 at which the balance weight are to be added.

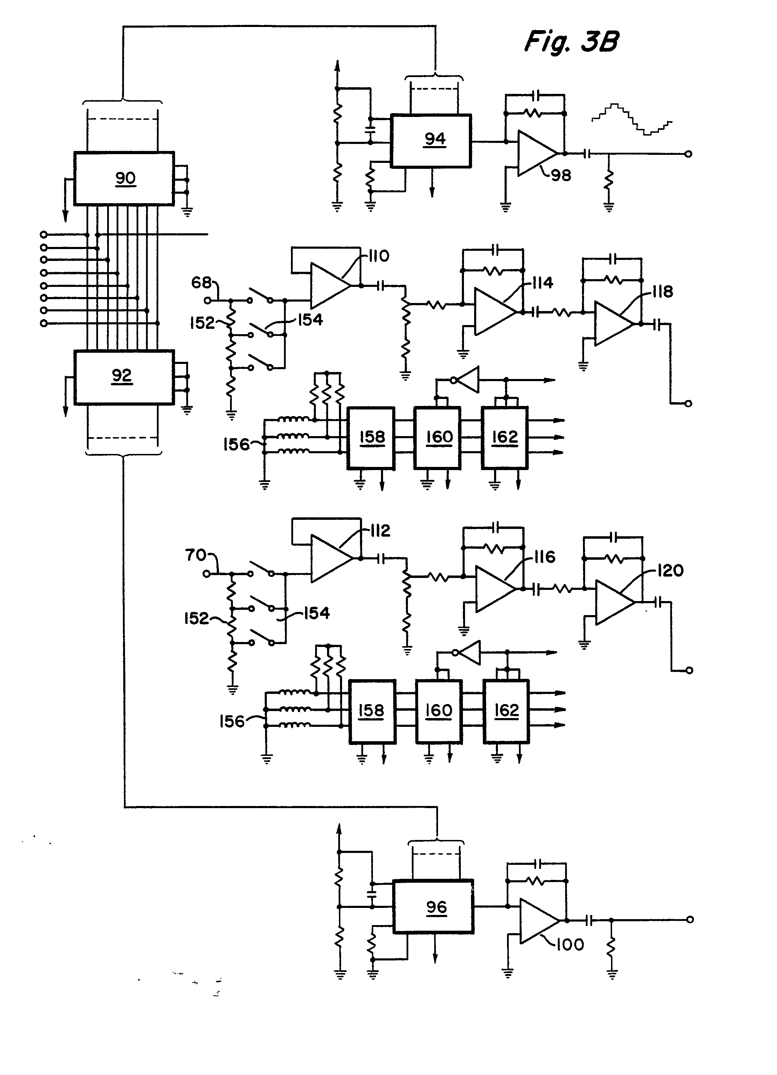

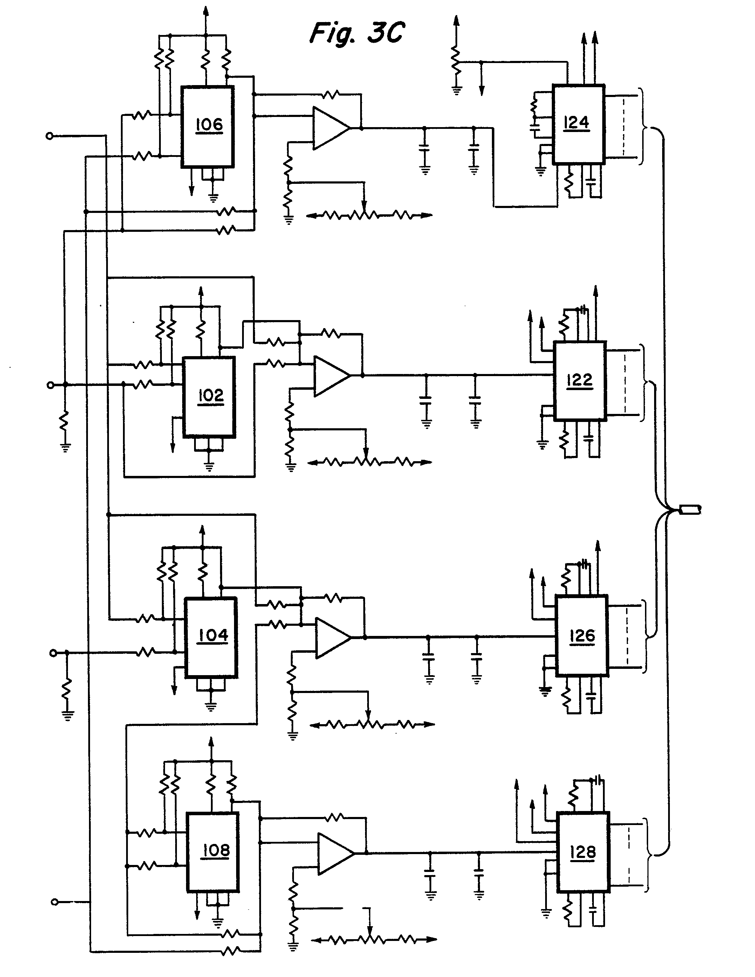

It will be noted in FIGURE 3B that the leads 68 and 70 from
the two vibration detectors 64 and 66 are connected to
ground through a voltage divider 152, portions of which can
be shunted by means of switches 154. The switches 154, in
turn, are connected to three solenoid coils 156 whose
energization is controlled by circuits 158, 160 and 162
which are, in turn, connected to the microprocessor 130
shown in FIGURE 1. Depending upon the magnitude of the
input displacement signal, one or more of the switches 154
will be properly actuated to establish the range of displacement signals which are displayed by the meters 42 and 46.  In FIGURE 3C, elements corresponding to those of FIGURE
2 are identified by like reference numerals.

The procedure to be followed in an actual balancing operation
is as follows:

(a)  A balancing procedure is initiated by turning the power
ON via switch 28 and by touching the initiate switch 58.
This automatically clears the memory of the microprocessor
130 and causes the microprocessor, through the calibration
circuit 131, to initially actuate one calibrating oscillator
72 or 74 followed by actuation of the other oscillator.
During this time, the calibration quantities given in
Equations (1) through (8) above are stored in the microprocessor's memory.  When this operation is complete, the
meters 42 and 46 will display the word "RUN".

(b)  The balancing configuration of the part to be balanced
(i.e., configurations 1 through 6 in FIGURE 1) is then
selected and the switch 20 pushed to advance the numeral
displayed thereon to the proper configuration chosen.

(c)  The actual dimensions $a$, $b$ and $c$ are then taken from
the rotor being balanced and the push switches 32, 34 and 36
are advanced to indicate the measurements taken.

(d)  The radii where the correction weights are to be added
on the left and right sides of the rotor are then measured
and entered on the switches 30 and 38.  In English units,
the radii are set to the nearest tenth of an inch; while in
metric units, the radii must be in millimeters and set to
the nearest millimeter.

(e)  When all of the values have been entered on switches
30-38 and calibration is complete with the displays 42 and
46 indicating "RUN"; the rotor 62 shown in FIGURE 2 is
brought up to the desired balancing speed by a motor and drive system, not shown. The actual rotational speed of the rotor is indicated on the display 48 shown in FIGURE 1. During this time, the switch 60 is positioned to be in the "READ" mode; and the displays 42 and 46 indicate the actual amounts or magnitudes of the unbalance signals in the right and left planes and the displays will indicate the angles from reference point 78 at which weights should be added or removed, depending upon the state of switches 54 and 56.

(f)   Initially, the amount readings on meters 42 and 46 will vacillate; however when the operator is satisfied that the vibrations are steady, he can capture them and cause them to be stored in the memory of microprocessor 130 by touching the switch 60 such that it is in the "HOLD" mode. The rotor 62 can now be stopped and need no longer be rotated. Since the amount and angle information is now stored in the microprocessor 130, corrections can be made to any of the dimensions displayed by the switches 30-38 without again rotating the rotor 62.

(g)   Desired vibration and correction data are then displayed on the displays 42 and 44 by touching the appropriate switches 50 or 52.

(h)   When placing a correction weight on the rotor 62, the angular location is found by rotating the phase reference mark on the rotor a number of degrees corresponding to that displayed by the left and right angle displays 40 and 42, in the direction of rotation. The correction weights can then be added or material removed from the top dead-center of the rotor depending upon the position of the (+-) touch switches 54 and 56.

(i)   After adding or subtracting weights in the right and left planes of the rotor being balanced, the operator causes the rotor 62 to again rotate and observes the readings on displays 40-46. In most cases, and because the weights added may not be of exactly the desired weight or the angle
at which they are placed on the rotor may vary slightly,
there will be at least some residual vibration displayed on
the displays.  If this vibration magnitude, however, falls
within permissible tolerances, the balancing operation is
complete.  If not, new vibration data is stored in the
microprocessor 130 by pushing the switch 60 such that it is
in the "HOLD" mode.  Additional correction weights or
removal of material can then be added as previously discussed
until the vibration tolerance is met.

In certain cases, there may be only certain tapped holes
equally spaced around the rotor into which correction
weights can be threaded.  Similarly, in the case of a bladed
turbine, for example, the correction weight will have to be
added to one of the blades since it cannot be supported in
the space between them.  The correction vector, however, may
be located in-between blades or in-between tapped holes.  In
this case, it is desirable to resolve this single vector
into two vectors which intersect the blades or the tapped
holes.  Assume, for example, that there are twelve tapped
holes spaced around the left or right balancing plane,
meaning that the holes are separated by 30°.  Assume further
that the correction vector is at an angle of 170° with
respect to the reference point on the rotor.  This means, of
course, that the correction vector is at an angle of 10°
with respect to the tapped hole diametrically opposite the
mark on the rotor and 20° from the next tapped hole in the
counterclockwise direction.  With this information, the
microprocessor can perform a single trigonometric computation
to resolve the single vector into two vectors which intersect
adjacent tapped holes or adjacent blades, as the case may
be.

In order to perform the foregoing operation, the touch
switch 20 is set to an arbitrary number other than 1 through
6; and in this case it will be assumed that in order to resolve the right plane vector into two, the switch 20 is
set to "0". The microprocessor is programmed such that if
the number of weight addition points is entered on switch 34
as shown in FIGURE 1, the computer will automatically
resolve the one vector into two vectors whose amounts and
angles are displayed on the displays 40-46. The angles, of
course, will correspond to the locations of two adjacent
weight addition points in the left or right plane, as the
case may be.

Alternatively, if it has been found necessary to add two
correction weights to the rotor, it may be desirable to
resolve these into one. Under these circumstances, the
angles and amounts of the two correction weights in the left
plane, for example, are manually recorded during the balancing
operation. In order to resolve the two corrections into
one, the touch switch 20 is arbitrarily advanced to "7", for
example. Thereafter, the read/hold switch 60 is set to the
"HOLD" mode and the standard gram switch 50 is set to the
"ON" position. At this point, the magnitude of one of the
two correction vectors is entered in touch switch 30; while
the angle of the vector is entered on touch switch 32. The
microprocessor 130 is programmed such that these amounts
will now be displayed on the right displays 44 and 46. The
touch switch 60 is now actuated to assume the "READ" mode;
and the information is stored in the microprocessor memory.
At the same time, the microprocessor is programmed to
transfer the angle and amount of the aforesaid first vector
to the left displays 40 and 42. The magnitude and angle of
the second vector is now entered on switches 30 and 32 as
before; and the switch 60 again set to the "READ" mode.
Stored in the memory of the microprocessor 130 are now the
amounts and angles of the two vectors. Again, by a relatively simple trigonometric computation, the sum of the two
vectors is computed in the microprocessor and now displayed
on the left displays 40 and 42. It is, of course, well within the skill of the art to program the microprocessor
130 to perform the foregoing calculations.

Although the invention has been shown in connection with a
certain specific embodiment, it will be readily apparent to
those skilled in the art that various changes in form and
arrangement of parts may be made to suit requirements
without departing from the spirit and scope of the invention.

- 1 -

CLAIMS:

1. In electronic balancing apparatus for two-plane dynamic balancing of rotating bodies, the combination of means for automatically calibrating said apparatus including automatic entry of right and left plane calibration weights, and filter means incorporated into said apparatus which will pass only vibration signals having a frequency corresponding to the speed of said rotating body without manual tuning of the same.

2. The combination of Claim 1 wherein said means for automatically calibrating said apparatus includes apparatus for oscillating opposite ends of said rotating body through a displacement with a known weight.

3. The combination of Claim 2 wherein said rotating body is oscillated while stationary.

4. The combination of Claim 1 wherein said balancing apparatus includes means for sensing the magnitude of a vibration signal, a digital read-out, and means for automatically selecting the range of unbalance which will be indicated on said read-out dependent upon the
magnitude of said vibration signal.

5. In electronic balancing apparatus for rotating bodies
wherein the amount of unbalance is indicated and its
angular position from a known point on the rotating
body is also indicated, the combination of means for
automatically dividing a vector indicating the amount
of unbalance and its angular position into two smaller
vectors angularly displaced with respect to said first-
mentioned vector.

6. The combination of Claim 5 wherein said body is provided
with a predetermined number of evenly-spaced correction
weight attachment points about its periphery, and
wherein said means for automatically dividing divides
said first-mentioned vector into two vectors which
intersect selected ones of said weight attachment
points.

7. The combination of Claim 6 wherein said selected ones
of the weight attachment points are adjacent each
other.

8. In electronic balancing apparatus for rotating bodies
wherein the amount of unbalance is indicated and its
angular position from a known point on the rotating
body is also indicated, the combination of means for
automatically combining two vectors indicating an
amount of unbalance and their angular positions into
one larger vector.

9. In electronic balancing apparatus for rotating bodies,
the combination of means for automatically calibrating
said apparatus including automatic entry of right and
left plane calibration weights.

10. In electronic balancing apparatus for rotating bodies, the combination of filter means incorporated into said apparatus which will pass only vibration signals having a frequency corresponding to the speed of said rotating body without manual tuning of the same.

11. In electronic balancing apparatus of the type wherein a vibration signal derived from a rotating body is compared in phase with a reference signal to determine the angular position of a point of unbalance on the rotating body, the combination of means responsive to said reference and vibration signals for producing two signals each having a magnitude proportional to two right-angle vectors whose vector sum is equal to a single vector representative of the magnitude of said vibration signal and located at an angle about a center point corresponding to said angular position of said point of unbalance, and means responsive to said two signals for displaying the magnitude and angular position of said single vector.

12. The combination of Claim 11 wherein said means for producing two signals comprises two analog multipliers, means for applying said vibration signal to each of said multipliers, means for applying to one of said multipliers a signal represented by $V \sin \omega t$, and means for applying to the other of said multipliers a signal represented by $v \cos \omega t$, where $\omega$ is the rotational velocity of said rotating body.

13. The combination of Claim 12 wherein said vibration signal is represented as $V \sin \omega t + \emptyset$.

14. The combination of Claim 11 wherein said means for displaying includes a microprocessor responsive to said two signals for computing the magnitude and angular position of said single vector.

0017926

15.   The combination of Claim 14 wherein said two signals comprise direct current signals.

Fig. 1

Fig. 2

*Fig. 3A*

*Fig. 3B*

Fig. 3C

## DOCUMENTS CONSIDERED TO BE RELEVANT

| Category | Citation of document with indication, where appropriate, of relevant passages | Relevant to claim |
|---|---|---|
| | US - A - 3 681 967 (G.E. HINES et al.) <br> * Abstract; column 11, line 24 - column 14, line 56; figure 5a * <br><br> -- | 1-3,9 |
| | US - A - 4 109 312 (R. BEUTEL) <br> * Column 3, lines 16-37; column 5, line 1 - column 6, line 13; figures * <br><br> -- | 4,5 |
| | FR - A - 2 191 727 (REGIE NATIO-NALE DES USINES RENAULT et al.) <br> * Claim 1, figure 3 * <br><br> -- | 5 |
| | US - A - 3 774 115 (R.A. GREINER) <br> * Abstract; column 3, line 49 - column 4, line 67; figure 2 * <br><br> ---- | 10-15 |

**CLASSIFICATION OF THE APPLICATION (Int. Cl. 3)**

G 01 M 1/22
      1/20

**TECHNICAL FIELDS SEARCHED (Int.Cl. 3)**

G 01 M 1/08
      1/20
      1/22
      1/24
      1/38

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

| | The present search report has been drawn up for all claims | |
|---|---|---|
| Place of search <br> The Hague | Date of completion of the search <br> 25-07-1980 | Examiner <br> VAN ASSCHE |

EPO Form 1503.1 06.78